# EUROPEAN PATENT SPECIFICATION

(11) **EP 0 825 465 B1**
(45) Date of publication and mention of the grant of the patent: **02.04.2003**
(21) Application number: 97401705.5
(22) Date of filing: 15.07.1997
(51) Int. Cl.: G02B 6/44

(54) **Single core power cable with an optical fiber element**
Einadriges elektrisches Kabel mit einem faseroptischen Element
Câble électrique monocoeur avec un élément à fibre optique

(30) Priority: 21.08.1996 NO 963472
(43) Date of publication of application: 25.02.1998
(73) Proprietor: Nexans, 75008 Paris (FR)
(72) Inventor: Johansen, Morten Arne, 0590 Oslo (NO)
(74) Representative: Feray, Valérie

(56) References cited:
- EP-A- 0 155 184
- EP-A- 0 417 784
- EP-A- 0 539 915
- FR-A- 2 509 480
- US-A- 5 274 726
- PATENT ABSTRACTS OF JAPAN vol. 016, no. 417 (E-1258), 3 September 1992 & JP 04 144010 A (FURUKAWA ELECTRIC CO LTD:THE), 18 May 1992,

## Description

The present invention relates to a fiber optic element installed within a single core power cable to constitute a composite cable. A single core power cable has a central power conductor and one or more layers of insulation material, as well as an outer metal screen and corrosion protection.

The optical fiber element is suitable for installation in the tough environment within a single core high voltage power cable.

The fiber element is to be inserted into the power cable in a stable position between the metal screen and the corrosion protection during manufacture of the power cable by applying the fiber element under or within a buffer sheath in parallel with the cable axis.

Document EP 0 155184 discloses a single core power cable comprising :
- a core,
- at least two layers covering said core,
- at least one fiber optic element comprising at least one optical fiber within a flattened metal tube, said flattened metal tube having a flat plane and having oscillations.

It is known from prior art to install ordinary fiber tubes in the outer layers of the power cable. It is, however, difficult - if not impossible - to obtain the necessary fiber overlength, - even if the tube is oscillated. Manufacturing processes are difficult.

The object of the invention is to provide improvements of such composite cables. The main features of the invention are defined in the claims.

The basic idea is to use a flattened oscillated tube for the fiber(s). The solution is to install one or more overlength fibers within a flattened tube and to oscillate the flattened in the outer layers of the power cable. We have thereby obtained a fiber overlength which is larger than with conventional technique.

The present invention requires special tube forming means, but has proven to be workable by experiment and pilot cable.

With this invention there is provided a fiber element which can be wound on reels or stored in long lengths, - in excess of 10 kilometers, - and which can be inserted into the power cable without interfering with cable armouring or sheathing processes.

Above mentioned and other features and objects of the present invention will clearly appear from the following detailed description of embodiments of the invention taken in conjunction with the drawings, where
Figure 1 schematically shows a power cable for which the invention is applicable, and
Figure 2 shows a fiber optic element.

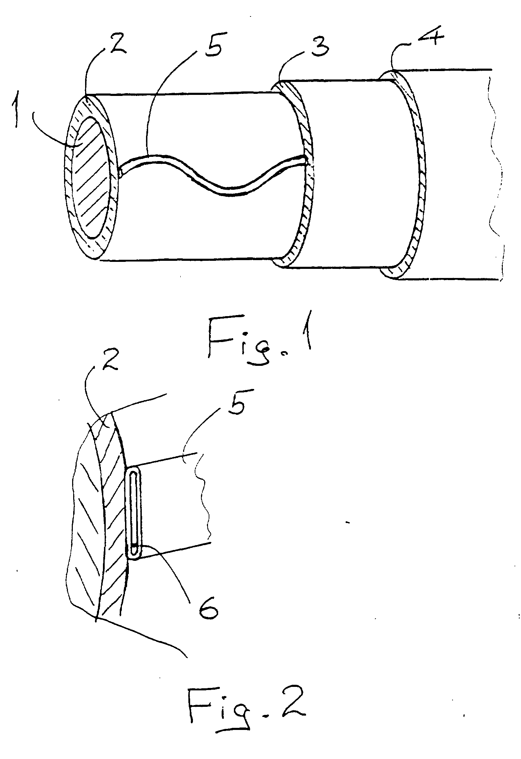

Figure 1 schematically illustrates the principles of the invention in connection with a single core power cable having a cable core 1, a metal screen 2 which can be a lead sheath, a first corrosion protecting layer 3 such as wound layers or an extruded plastic sheath, and additional corrosion protecting layer(s) 4. A fiber optic element 5 is arranged at the interface between layers 2 and 3 as described below in connection with one embodiment of the invention.

The element 5 is flattened metal tube (Fig 2) within which at least one optical fiber 6 is oscillated. The flattened metal tube itself is oscillated like a sinus in its flat plane, as indicated in Figure 1. Depending upon the space available within the metal tube 5, it may contain one or more fiber ribbon(s).

The oscillated flattened tube 5 is arranged in parallel with the cable axis on top of the metal screen 2 or on a taping (not shown) over the metal screen. A thin tape, string or the like (not shown) may be spun around the cable core and fiber element 5 in order to keep the element. in place before entering an extruder for the plastic sheath 3, or a winding machine for alternative plastic tapes.

The element 5 has no sharp edges pointing into the plastic sheath 3 and there is no risk of tearing the plastic sheath during handling of the cable. There is no need to provide a special slot in the plastic sheath for accommodating the fiber element. The plastic sheath should fully cover the element.

The magnitude of the overlength required is decided from two factors:
a) the diameter of the cable, - or rather the radius at which the fiber element is arranged within the power cable, and
b) the smallest bending radius which is allowed for the power cable. This radius also determines the diameter of reels, drums and the like, on which the cable can be wound or the diameter of pay-off wheels over which the cable must be passed.

The factor b) is most important as the relevant bending radius of the cable can be 2.5 - 5 meters, whereas the cable diameter which is in the order of 100 to 200 mm will be negligible compared to said bending radius.

The required overlength of the fiber is obtained by oscillating the flattened metal tube as indicated and by oscillating the fiber(s) within the compartment. The frequency and amplitude of the oscillations are decided in each case, but these factors are limited by the minimum bending diameter of the fiber(s).

With such a construction the optical fiber will be free from any mechanical stress as all such stress is taken up by straightening the tube and the fiber(s).

The fiber optic element 5 can be made by feeding the optical fiber(s) 6 into a circular (steel) tube element, while passing the tube through a first set of rollers or other tube forming means (not shown), thus giving the element the required flattened crossection. The flattened tube 5 can then be passed through a second set of rollers or other tube forming means (not shown), thus giving the flattened tube the required sinusoidal form in its flat plane.

The above detailed description of embodiments of this invention must be taken as examples only and should not be considered as limitations on the scope of protection, which is defined by the claims.

## Claims

1. A Single core power cable comprising :
- a core (1),
- at least two layers (2, 3, 4) covering said core,
- at least one fiber optic element comprising at least one optical fiber (6) within a flattened metal tube (5), said flattened metal tube having a flat plane and having oscillations,
**characterized in that** said at least one optical fiber (6) is installed as an overlength fiber within said metal flattened tube (5) and said at least one optical fiber (6) has oscillations within said flattened metal tube (5) **and in that** said flattened metal tube is located between said layers (2, 3, 4) and said oscillations of said flattened metal tube (5) are in said flat plane.

2. A single core power cable according to claim 1 **characterized in that** one of said layers (2) entirely covers said core (1).

3. A single core power cable according to any of claims 1 or 2 **characterized in that** one of said layers in contact with said core (1) is a metal screen (2) and preferably a lead sheath.

4. A single core power cable according to claim 3 **characterized in that** it comprises a taping covering said metal screen (2), said flattened metal tube (5) being located between said taping and one of said layers (3).

5. A single core power cable according to any of claims 1 to 4 **characterized in that** one of said layers (3, 4) is a corrosion protective layer (3, 4) such as a wound layer, an extruded plastic sheath or a plastic tape.

## Patentansprüche

1. Einfachleiterstromkabel, umfassend:
- einen Leiter (1),
- mindestens zwei Lagen (2, 3, 4), die den Leiter überziehen,
- mindestens ein Lichtleitfaserelement, das mindestens eine Lichtleitfaser (6) in einem abgeflachten Metallrohr (5) umfasst, wobei das abgeflachte Metallrohr eine flache Ebene und Schwingungen aufweist,
**dadurch gekennzeichnet, dass** die mindestens eine Lichtleitfaser (6) als Reservefaser in dem abgeflachten Metallrohr (5) eingebaut ist und die mindestens eine Lichtleitfaser (6) Schwingungen in dem abgeflachten Metallrohr (5) aufweist, und dadurch dass das abgeflachte Metallrohr sich zwischen den Lagen (2, 3, 4) befindet und sich die Schwingungen des abgeflachten Metallrohrs (5) in der flachen Ebene befinden.

2. Einfachleiterstromkabel gemäß Anspruch 1, **dadurch gekennzeichnet, dass** eine der Lagen (2) den Leiter (1) ganz überzieht.

3. Einfachleiterstromkabel gemäß einem der Ansprüche 1 oder 2, **dadurch gekennzeichnet, dass** eine der Lagen in Kontakt mit dem Leiter (1) eine Metallabschirmung (2) und bevorzugt ein Bleimantel ist.

4. Einfachleiterstromkabel gemäß Anspruch 3, **dadurch gekennzeichnet, dass** es eine Bandbewicklung umfasst, welche die Metallabschirmung (2) überzieht, wobei das abgeflachte Metallrohr (5) sich zwischen der Bandbewicklung und einer der Lagen (3) befindet.

5. Einfachleiterstromkabel gemäß einem der Ansprüche 1 bis 4, **dadurch gekennzeichnet, dass** eine der Lagen (3, 4) eine Korrosionsschutzlage (3, 4), wie etwa eine Wickellage, ein extrudierter Kunststoffmantel oder ein Kunststoffband, ist.

## Revendications

1. Câble d'alimentation monoconducteur comprenant :
- un conducteur (1),
- au moins deux couches (2, 3, 4) recouvrant ledit conducteur,
- au moins un élément à fibres optiques comprenant au moins une fibre optique (6) à l'intérieur d'un tube métallique aplati (5), ledit tube métallique aplati ayant un plan plat et comportant des oscillations,
**caractérisé en ce que** ladite au moins une fibre optique (6) est installée en tant que fibre sur toute la longueur à l'intérieur dudit tube métallique aplati (5) et ladite au moins une fibre optique (6) présente des oscillations à l'intérieur dudit tube métallique aplati (5) et **en ce que** ledit tube métallique aplati est situé entre lesdites couches (2, 3, 4) et lesdites oscillations dudit tube métallique aplati (5) se trouvent dans ledit plan plat.

2. Câble d'alimentation monoconducteur selon la revendication 1, **caractérisé en ce que** l'une desdites couches (2) recouvre entièrement ledit conducteur (1).

3. Câble d'alimentation monoconducteur selon l'une quelconque des revendications 1 ou 2, **caractérisé en ce que** l'une desdites couches en contact avec ledit conducteur (1) est un écran métallique (2) et, de préférence, une gaine de plomb.

4. Câble d'alimentation monoconducteur selon la revendication 3, **caractérisé en ce qu'**il comprend un guipage recouvrant ledit écran métallique (2), ledit tube métallique aplati (5) étant situé entre ledit guipage et l'une desdites couches (3).

5. Câble d'alimentation monoconducteur selon l'une quelconque des revendications 1 à 4, **caractérisé en ce que** l'une desdites couches (3, 4) est une couche anticorrosion (3, 4) telle qu'une couche enroulée, une gaine en plastique extrudé ou un ruban plastique.
